# DEMANDE DE BREVET EUROPEEN

(11) **EP 4 280 275 A1**
(43) Date de publication de la demande: **22.11.2023**
(21) Numéro de dépôt: 23173330.4
(22) Date de dépôt: 15.05.2023
(51) Int. Cl.: H01L 23/522, H01L 23/528, H01L 23/00, H04L 9/32

(54) **PROCÉDÉ DE RÉALISATION D'UNE ZONE D'INDIVIDUALISATION D'UN CIRCUIT INTÉGRÉ**

(30) Priorité: 18.05.2022 FR 2204747
(71) Demandeur: Commissariat à l'énergie atomique et aux énergies alternatives, 75015 Paris (FR)
(72) Inventeur: LANDIS, Stefan, 38054 GRENOBLE Cedex 09 (FR); EXBRAYAT, Yorrick, 38054 GRENOBLE Cedex 09 (FR)
(74) Mandataire: Hautier IP

(57) **Abrégé**

L'invention porte sur un procédé de réalisation d'une zone d'individualisation d'une puce microélectronique comprenant un premier (10A) et un deuxième (20A) niveaux de pistes électriques (10, 20), et un niveau (30A) d'interconnexions comportant des vias (30), le procédé comprenant les étapes suivantes :
• fournir le premier niveau (10A) et une couche diélectrique (200),
• déposer de façon aléatoire des particules (P) sur la couche diélectrique (200),
• déposer un masque de gravure (300) sur la couche diélectrique (200) et les particules (P),
• planariser de façon à obtenir une couche composite (300') comprenant les particules (P),
• former une couche de lithographie (400) comprenant des motifs d'ouvertures (401),
• graver la couche composite au travers des motifs d'ouvertures (401) pour former des ouvertures de masque (301, 301F), puis graver la couche diélectrique (200) au travers des ouvertures de masque (301, 301F), de façon à obtenir des ouvertures de via (320) fonctionnelles et des ouvertures de via dégradées (320F),
• remplir les ouvertures de via (320, 320F) de sorte à former les vias (30) du niveau (30A) d'interconnexions, lesdits vias (30) comprenant des vias fonctionnels (30OK) au niveau des ouvertures fonctionnelles (320) et des vias dysfonctionnels (30KO) au niveau des ouvertures dégradées (320F).

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

D'autres solutions consistent à dégrader volontairement et aléatoirement les vias d'un niveau d'interconnexions. Le document US 2014/042627 A1 divulgue un procédé dans lequel certaines ouvertures du masque de gravure permettant de former les vias sont partiellement bouchées par des particules issues d'un polymère diblocs.

Ce procédé ne permet cependant pas de boucher de façon satisfaisante les ouvertures du masque de gravure.

Un objet de la présente invention consiste donc à dépasser les limitations des solutions connues.

En particulier, un objet de la présente invention est de proposer un procédé de réalisation d'une zone d'individualisation qui soit efficace et qui présente un caractère aléatoire.

### RESUME

Pour atteindre cet objectif, selon un mode de réalisation on prévoit un procédé de réalisation d'une zone d'individualisation d'une puce microélectronique, ladite puce comprenant au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau.

La puce présente au moins une autre zone, distincte de la zone d'individualisation, destinée à former une zone fonctionnelle de la puce.

Le procédé comprend au moins les étapes suivantes effectuées au niveau de la zone d'individualisation de la puce :
- fournir au moins le premier niveau de pistes électriques,
- former au moins une couche diélectrique sur le premier niveau,
- déposer aléatoirement des particules sur une face exposée de la couche diélectrique, puis
- appliquer un tampon de brassage sur ladite face exposée pour que le tampon de brassage déplace au moins certaines particules sur la face exposée de la couche diélectrique,
- déposer une couche de masque sur la face exposée comprenant les particules,
- planariser la couche de masque de façon à obtenir une couche composite comprenant les particules et présentant une surface plane,
- déposer une couche de lithographie sur la couche composite,
- former dans la couche de lithographie des motifs d'ouvertures, lesdits motifs d'ouvertures étant situés au moins en partie au droit des pistes électriques,
- ouvrir la couche composite au travers des motifs d'ouvertures de la couche de lithographie, de façon à former des ouvertures de masque, lesdites ouvertures de masque comprenant des ouvertures de masque altérées au niveau des particules de la couche composite, et des ouvertures de masque débouchantes en dehors des particules de la couche composite,
- graver l'au moins une couche diélectrique au travers des ouvertures de masque, de façon à former des ouvertures de vias débouchant sur le premier niveau des pistes électriques, comprenant des ouvertures de vias fonctionnelles au droit des ouvertures de masque débouchantes, et des ouvertures de vias dégradées au droit des ouvertures de masque altérées,
- remplir les ouvertures de vias avec un matériau électriquement conducteur de sorte à former au moins les vias du niveau d'interconnexions, lesdits vias comprenant des vias fonctionnels au niveau des ouvertures de vias fonctionnelles et des vias dysfonctionnels au niveau des ouvertures de vias dégradées.

Le procédé comprend en outre, préalablement au dépôt des particules dans la zone d'individualisation, une formation d'un masque de protection sur la zone destinée à former la zone fonctionnelle de la puce.

Ainsi, les particules déplacées par le tampon sont réparties aléatoirement sur la couche diélectrique préalablement à la formation de la couche de masque. La formation des ouvertures de masque dans la couche de masque est perturbée. En particulier, certaines ouvertures de masque sont mal formées au sein de la couche de masque du fait de la présence des particules. Ces ouvertures de masque altérées, qui peuvent être en partie obstruées ou totalement bouchées, empêchent ensuite que certaines ouvertures de vias soient correctement formées. Des ouvertures de vias dégradées sont ainsi formées, qui peuvent être typiquement soit totalement bouchées soit partiellement bouchées. Le matériau électriquement conducteur ne peut plus être correctement déposé dans ces ouvertures de vias dégradées. Les particules déposées avant formation de la couche de masque conduisent *in fine* à la formation de vias dysfonctionnels, qui peuvent être inactifs - c'est-à-dire sans conduction électrique - ou dégradés - c'est-à-dire avec une conduction électrique très inférieure à une conduction nominale d'un via fonctionnel.

Le procédé proposé permet donc de dégrader volontairement mais aléatoirement le niveau d'interconnexions. Cette dégradation volontaire permet de créer des vias dysfonctionnels répartis de façon aléatoire au sein de la zone d'individualisation de la puce. Le diagramme de réponse de la puce ou du circuit intégré sera donc intimement lié au caractère aléatoire de la répartition des vias dysfonctionnels. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique. Le caractère aléatoire ou le désordre sur les positions des particules, obtenu à l'issue du dépôt et du brassage des particules, est supérieur à celui obtenu à partir d'un copolymère diblocs comme divulgué par le document US 2014/042627 A1, puisqu'un copolymère diblocs présente nécessairement intrinsèquement un certain ordre.

De manière particulièrement avantageuse, il a été constaté que le procédé proposé permet d'aboutir à ce que le caractère aléatoire de la répartition des vias dysfonctionnels ou inactivés soit homogène ou sensiblement homogène sur toute la surface d'une plaque portant des zones d'individualisation. Ainsi une zone d'individualisation située au bord d'une plaque bénéficiera d'un caractère aléatoire de même ampleur qu'une zone d'individualisation située au centre de cette même plaque.

Par ailleurs, le dépôt aléatoire de particules, par exemple à partir d'une solution colloïdale, et l'application d'un tampon de brassage déplaçant lesdites particules sont des étapes courantes des technologies de la microélectronique. Ces étapes peuvent par exemple correspondre à la mise en oeuvre au moins partielle d'un procédé de polissage mécano-chimique CMP (acronyme de « Chemical Mechanical Polishing »), bien connu et largement utilisé dans les technologies de la microélectronique. Cela permet d'éviter des coûts de développement liés à de nouveaux procédés. Les coûts de mise en oeuvre de ce procédé d'individualisation sont ainsi réduits.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en oeuvre et à un cout réduit, afin de réaliser une zone d'individualisation d'un circuit intégré.

Un autre aspect concerne un procédé de réalisation d'un dispositif microélectronique comportant au moins un circuit intégré, le circuit intégré comportant au moins:
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en oeuvre le procédé décrit précédemment, de préférence sur une partie seulement du circuit intégré.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures nA (n=1...16, n≠4) illustrent schématiquement en coupe transverse des étapes de modes de réalisation d'une zone d'individualisation d'un circuit intégré selon la présente invention.

Les figures nB (n=1... 16, n≠4) illustrent schématiquement en vue de dessus les étapes illustrées aux figures nA correspondantes.

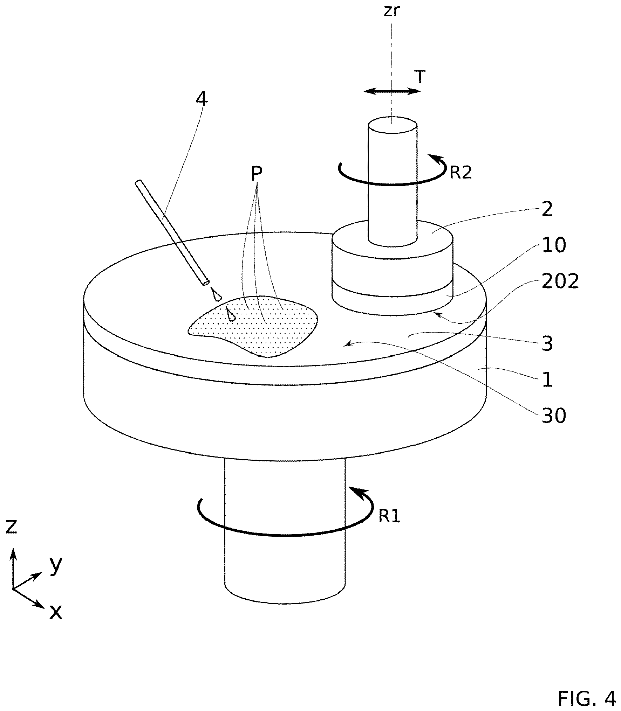

La figure 4 illustre schématiquement un équipement de CMP permettant la mise en oeuvre du procédé de réalisation d'une zone d'individualisation d'un circuit intégré selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le dépôt aléatoire des particules se fait par dispersion d'une solution contenant lesdites particules en suspension.

Selon un exemple, l'application du tampon de brassage sur la face exposée comprend au moins un mouvement de rotation relatif dudit tampon par rapport à la face exposée autour d'un axe normal à la face exposée de la couche diélectrique.

Ainsi, au moins l'un parmi le tampon de brassage et la face exposée de la couche diélectrique est déplacé par rapport à l'autre parmi le tampon de brassage et cette face exposée. Selon un mode de réalisation, le tampon de brassage est déplacé et la face exposée est fixe par exemple par rapport à un bâti de l'équipement supportant la face exposée. Selon un mode de réalisation alternatif, le tampon de brassage est fixe et la face exposée est déplacée. Alternativement le tampon de brassage et la face exposée sont tous les deux déplacés.

Selon un exemple ce déplacement peut comprendre deux rotations autour d'axes coaxiaux ou non co-axiaux mais parallèles.

Selon un exemple ce déplacement comprend au moins une rotation ou au moins une translation. Selon un exemple l'application du tampon de brassage sur la face exposée comprend, de préférence simultanément, au moins un mouvement de rotation relatif dudit tampon par rapport à la face exposée autour d'un axe normal à la face exposée de la couche diélectrique et/ou au moins un mouvement de translation relatif dudit tampon par rapport à la face exposée de la couche diélectrique. Le mouvement de translation se fait typiquement dans un plan parallèle à la face exposée.

Selon un exemple l'application du tampon de brassage sur la face exposée comprend au moins un mouvement de translation relatif dudit tampon par rapport à la face exposée de la couche de masque.

Selon un exemple le mouvement est en partie au moins aléatoire. Par exemple la vitesse et/ou la trajectoire du déplacement sont aléatoires.

Selon un exemple, le dépôt aléatoire des particules suivi par l'application du tampon de brassage correspond à une étape d'un procédé de polissage mécano-chimique.

Selon un exemple, la planarisation de la couche de masque est effectuée par un procédé de polissage mécano-chimique (CMP).

Selon un exemple alternatif ou en combinaison avec le précédent, la planarisation de la couche de masque est effectuée par gravure.

Selon un exemple, les particules restent couvertes par la couche de masque à l'issue de la planarisation.

Selon un exemple alternatif, les particules présentent une partie exposée à l'issue de la planarisation.

Selon un exemple, la couche diélectrique présente une épaisseur initiale e, avant l'étape de polissage mécano-chimique, et l'étape de polissage mécano-chimique est configurée de façon à ce que la couche diélectrique présente, après ladite étape de polissage mécano-chimique, une épaisseur finale e', telle que e' ≥ 0,9.e, de préférence e' ≥ 0,95.e et de préférence e' ≥ 0,98.e.

Selon un exemple, les particules présentent chacune au moins une dimension supérieure ou égale à un diamètre des motifs d'ouvertures de la couche de lithographie. Cela permet d'augmenter la probabilité qu'une particule conduise à la formation d'une ouverture de masque totalement bouchée. Cela permet d'obtenir *in fine* directement un via dysfonctionnel inactif, sans conduction électrique. Cela évite de recourir ultérieurement à une étape supplémentaire d'inactivation.

Selon un exemple, les particules présentent une dimension minimale L supérieure à 20 nm et de préférence supérieure à 70 nm. Cette dimension minimale L correspond typiquement à la dimension critique CDᵥᵢₐ du via définie par la dimension minimale des motifs d'ouvertures, prise dans un plan parallèle à la couche de lithographie. Cette dimension critique est par exemple le diamètre du via, pris selon une coupe parallèle aux différents niveaux des pistes électriques intégrées. Une dimension L en adéquation avec la dimension critique CDᵥᵢₐ permet d'augmenter la probabilité qu'une particule conduise à la formation d'une ouverture de masque totalement bouchée. Cela permet d'obtenir ensuite un via dysfonctionnel inactif, c'est-à-dire sans conduction électrique. Cela évite de recourir ultérieurement à une étape supplémentaire d'inactivation, qui est généralement mise en oeuvre lorsque le via dysfonctionnel considéré présente une faible conduction électrique.

Selon un exemple, les particules sont des billes ou des rouleaux.

Selon un exemple, l'au moins une couche diélectrique comprend une couche à base de SiOCH dense ou poreux (p-SiOCH), ou à base de SiO₂, ou encore à base de SiCN ou de SiON.

Selon un exemple, les particules sont minérales, de préférence à base d'oxyde de silicium. Selon un exemple, les particules présentent une composition chimique semblable ou identique à celle de la couche diélectrique.

Selon un exemple, les particules présentent une composition chimique différente de celle de la couche de masque. En particulier, la composition chimique des particules peut être choisie de façon à ce que la couche de masque soit gravée sélectivement aux particules, par exemple avec une sélectivité supérieure ou égale à 5:1 entre la couche de masque et les particules lors de l'ouverture de la couche de masque.

Selon un exemple, la gravure de l'au moins une couche diélectrique se fait par gravure sèche anisotrope, selon une direction normale à la face exposée.

Selon un exemple, l'ouverture de la couche composite se fait par gravure sèche anisotrope, selon une direction normale à la face exposée.

Selon un exemple, les particules présentent une sélectivité de gravure S_{P:HM} vis-à-vis de la couche de masque, lors de l'ouverture de la couche composite, inférieure ou égale à 1:5. Cela permet de conserver en partie la particule lors de l'ouverture de la couche composite. L'ouverture de masque altérée reste ainsi bouchée suffisamment longtemps. La gravure de la couche diélectrique sous-jacente est ensuite limitée ou évitée.

Selon un exemple, plusieurs vias sont associés à une même piste électrique du deuxième niveau et à une même piste électrique du premier niveau. Cela permet d'avoir un taux de conductivité nominale entre ces pistes qui soit fonction du taux de vias dysfonctionnels ou inactifs.

Selon un exemple, la puce présente au moins une autre zone, distincte de la zone d'individualisation, destinée à former une zone fonctionnelle de la puce. Selon un exemple, un masque de protection est formé sur ladite zone destinée à former la zone fonctionnelle, préalablement au dépôt des particules dans la zone d'individualisation.

La réalisation des vias dysfonctionnels aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. Le premier et le deuxième niveaux de pistes électriques ainsi que le niveau d'interconnexion s'étendent dans ladite au moins une autre zone. La zone fonctionnelle est destinée à assurer des fonctions logiques pour le fonctionnement attendu du circuit intégré. Les pistes électriques et les vias de cette zone fonctionnelle sont typiquement sans défaut. Outre les pistes électriques, cette zone fonctionnelle peut comprendre des structures micro-électronique, tel que par exemple des transistors, des diodes, des MEMS etc. La zone fonctionnelle est réalisée de façon standard, avec les procédés bien connus de l'homme du métier. Dans la suite, seule la zone d'individualisation et son procédé de fabrication sont illustrés et détaillés.

Dans le cadre de la présente invention, une zone d'individualisation dite PUF est parfaitement différenciée d'une telle zone fonctionnelle, par exemple destinée à effectuer des opérations logiques. La zone d'individualisation a quant à elle principalement et de préférence uniquement comme fonction de permettre l'identification unique de la puce et donc l'authentification de la puce. À cet effet, et comme cela sera détaillé par la suite, lors du procédé de fabrication, on prévoit de dégrader aléatoirement le niveau d'interconnexions de façon à obtenir des vias dysfonctionnels ou inactifs. Plus précisément, on prévoit de créer de manière aléatoire des défauts au niveau de certains vias, de façon à rendre dysfonctionnels ou inactifs ces vias.

Un diagramme de réponse du circuit intégré est obtenu en appliquant une routine de test électrique ou logique aux entrées (pistes du premier niveau par exemple) de la zone d'individualisation, puis en mesurant l'état électrique ou logique en sortie (pistes du deuxième niveau pour ce même exemple) de la zone d'individualisation. Le principe est que l'on dispose pour chaque circuit intégré d'une zone d'individualisation comprenant un réseau unique de vias fonctionnels et de vias dysfonctionnels. La réponse de chaque circuit intégré sera donc différente. Chaque circuit intégré pourra donc être identifié de manière unique. La zone d'individualisation peut être qualifiée de zone PUF et la zone fonctionnelle peut être qualifiée de zone non-PUF.

Selon l'invention, le diagramme de réponse du circuit intégré dépend du nombre et de la position des vias dysfonctionnels ou inactifs dans la zone d'individualisation.

La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

Un niveau d'interconnexions comprend des portions conductrices généralement qualifiées de vias, qui sont destinées à connecter des pistes d'un premier niveau avec des pistes d'un deuxième niveau. Les différents niveaux de pistes électriques et d'interconnexion sont en outre généralement isolés des autres éléments du circuit intégré par au moins une couche diélectrique. On notera que des vias peuvent connecter des pistes de deux niveaux qui ne sont pas directement successifs mais qui sont eux même séparés par un ou plusieurs autres niveaux.

Selon l'invention, les vias fonctionnels présentent une conduction électrique nominale, qui est généralement définie par le dimensionnement des vias. Les vias dysfonctionnels comprennent des vias inactifs et des vias dégradés. Les vias inactifs ne présentent pas de conduction électrique. Les vias dégradés présentent typiquement une conduction électrique très inférieure à la conduction électrique nominale des vias fonctionnels, typiquement au moins dix fois inférieure à la conduction électrique nominale. La conduction électrique des vias dégradés peut également évoluer dans le temps. Un via dégradé peut devenir un via inactif, par exemple par claquage. Selon une possibilité préférée, les vias dégradés sont désactivés de manière à former uniquement des vias inactifs.

Le procédé est typiquement mis en oeuvre dans les étapes de fabrication de « fin de ligne », dites BEOL (acronyme de Back End Of Line), correspondant à la réalisation des niveaux d'interconnections électriques.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

Dans la présente demande, les termes « puce » et « circuit intégré » sont employés en synonymes.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement selon un plan. De préférence les vias forment chacun un plot ou un cylindre, de section sensiblement circulaire, et orienté perpendiculairement aux plans des niveaux de pistes électriques.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en oeuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B. Elle est de préférence notée S_{A:B}. Une sélectivité S_{A:B} égale à 5:1 signifie que le matériau A est gravé 5 fois plus vite que le matériau B. Une sélectivité S_{A:B} inférieure à, ou supérieure à, s'applique à la valeur du premier matériau A. Une sélectivité S_{A:B} supérieure à 5:1 vaut par exemple 10:1. Une sélectivité S_{A:B} inférieure à 1:5 vaut par exemple 0,5:5, soit 1:10.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl méthacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Des couches et/ou des revêtements antireflets peuvent être associés aux résines. Cela permet notamment d'améliorer la résolution de lithographie. Dans la suite, les différents masques à base de résine sont de préférence associés à de telles couches antireflets.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

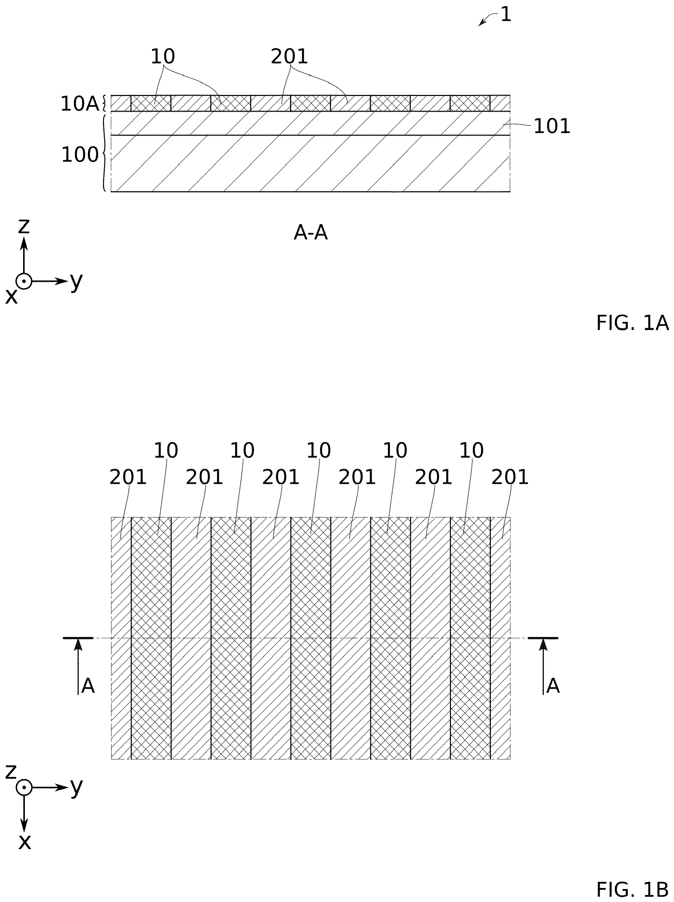

Les figures 1A et 1B illustrent de manière schématique la formation d'un premier niveau 10A de pistes électriques 10 sur un substrat 100, dans la zone d'individualisation 1. Le substrat 100 peut typiquement être à base de silicium et comporter des composants élémentaires, par exemple des transistors, sur un niveau 101 de « début de ligne », dit FEOL (acronyme de « Front End Of Line »).

Le niveau 10A s'étend principalement selon un plan xy. Le premier niveau de pistes 10A comprend des pistes électriques 10. Ces pistes électriques 10 sont formées dans un matériau conducteur tel que le cuivre ; ces pistes électriques 10 sont typiquement séparées et/ou encapsulées par une couche diélectrique 201. Cette couche diélectrique a également pour fonction de former une barrière contre la diffusion du cuivre. Cette couche diélectrique 201 est par exemple formée de SiO₂.

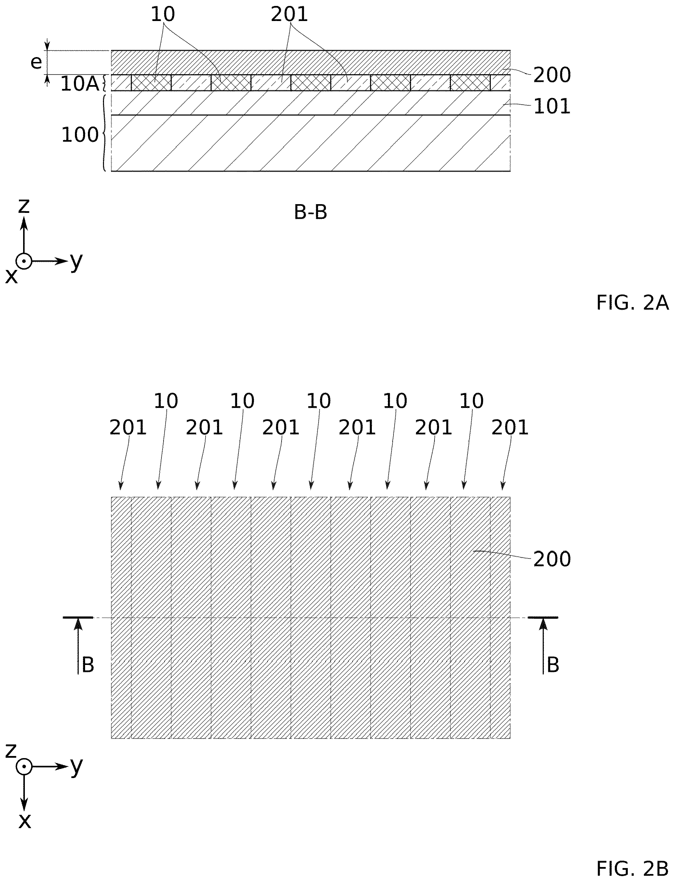

Les figures 2A et 2B illustrent la formation d'une couche diélectrique 200 sur le premier niveau de pistes 10A, en prévision de la formation du niveau d'interconnexion 30A.

La couche diélectrique 200 est de préférence directement au contact du premier niveau 10A. Elle est à base d'un matériau diélectrique, par exemple à base d'un oxyde de silicium ou d'un nitrure de silicium, ou encore d'un oxy-nitrure de silicium. Elle peut être à base de SiO₂, de SiOCH, de SiₓN_{y}, de SiCN, de SiOₓN_{y} ou de SiOₓC_{y}N_{z} avec x, y, z des nombres rationnels positifs non nuls.

Cette couche diélectrique 200 peut être déposée par dépôt chimique en phase vapeur (CVD), par exemple par dépôt chimique en phase vapeur assisté par plasma (PECVD, acronyme de « Plasma Enhanced Chemical Vapor Déposition ») ou par dépôt chimique en phase à basse pression (LPCVD, acronyme de « Low Pressure Chemical Vapor Déposition »).

La couche diélectrique 200 peut présenter une épaisseur e typiquement comprise entre 20 nm et 1000 nm, de préférence entre 50 nm et 500 nm, par exemple de l'ordre de 100 nm.

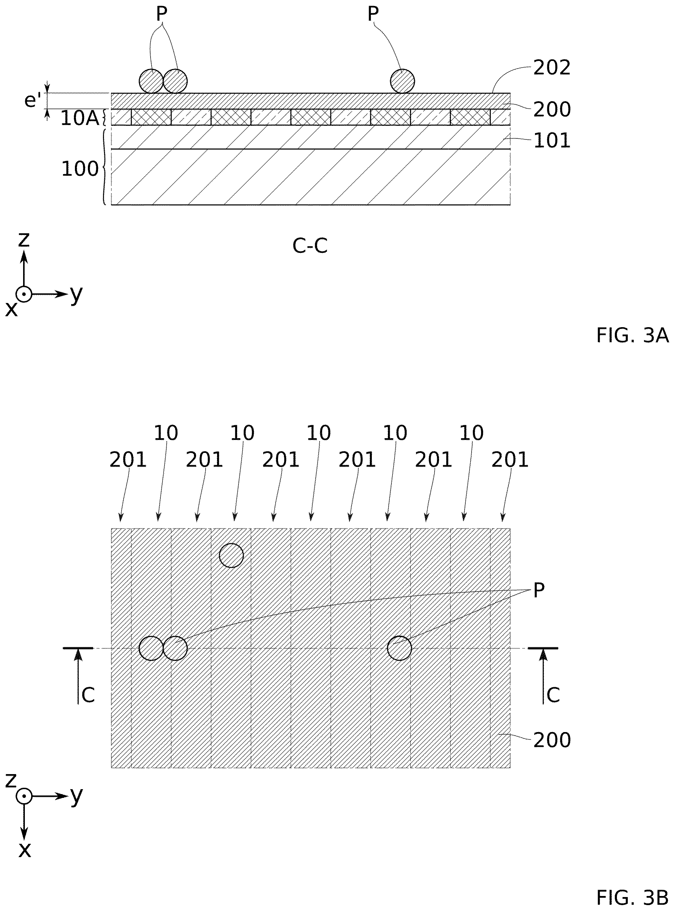

Comme illustré aux figures 3A, 3B, et à la figure 4, des particules P sont ensuite déposées aléatoirement sur la face exposée 202 de la couche diélectrique 200. Le dépôt des particules P peut se faire par dispersion d'une solution colloïdale comprenant lesdites particules P en suspension. Dans une telle solution colloïdale, les particules P sont animées par un mouvement brownien qui assure une distribution aléatoire des positions de particules au sein de la solution, avant dépôt. Lors du dépôt sur la surface exposée 202 de la diélectrique 200, ce caractère aléatoire sur les positions de particules est conservé. À ce stade, les particules P se répartissent donc aléatoirement à la surface de la couche diélectrique 200. Le dépôt des particules P peut se faire sur une surface intermédiaire, typiquement une surface 30 d'un tampon 3 de polissage ou de brassage, mise en contact avec la face exposée 202 de la couche diélectrique 200, comme illustré à la figure 4. La dispersion peut se faire dans ce cas sur la surface intermédiaire 30, par exemple via une canule 4. Le caractère aléatoire sur les positions de particules est conservé lors de la mise en contact de la surface intermédiaire 30 avec la surface exposée 202 de la couche diélectrique 200.

Un brassage des particules P à la surface de la couche diélectrique 200 est ensuite effectué. Ce brassage est typiquement effectué par application d'un tampon 3 de brassage au contact des particules P et de la surface 202 de la couche diélectrique 200. Ainsi, au moins l'un parmi le tampon 3 de brassage et la face exposée 202 de la couche diélectrique 200 est déplacé par rapport à l'autre parmi le tampon de brassage et cette face exposée 202. Selon un mode de réalisation, le tampon 3 de brassage est déplacé et la face exposée 202 est fixe par exemple par rapport à un bâti de l'équipement supportant la face exposée. Selon un mode de réalisation alternatif, le tampon 3 de brassage est fixe et la face exposée 202 est déplacée. Alternativement le tampon 3 de brassage et la face exposée 202 sont tous les deux déplacés.

Selon un exemple ce déplacement comprend au moins une rotation R1, R2 et/ou au moins une translation T. De préférence ce déplacement comprend simultanément au moins une rotation R2 autour d'un axe zr selon z et une translation T dans un plan xy perpendiculaire à cet axe zr. Le déplacement peut comprendre au moins deux mouvements de rotation R1, R2. Par exemple, la face exposée 202 peut être mise en rotation selon une rotation R2 autour d'un axe correspondant sensiblement au centre de la face. Le tampon 3 de brassage peut être mis en rotation selon une rotation R1 autour d'un axe décalé vis-à-vis du centre de la face 202. Le tampon 3 de brassage et la face exposée 202 peuvent être mis en rotation selon des première et deuxième rotations R1, R2 de même sens ou contrarotatives. Le mouvement relatif du tampon 3 de brassage et de la face exposée 202 peut donc comprendre une ou plusieurs rotations, et éventuellement une ou plusieurs translations.

Dans la suite de la description, par souci de concision il est indiqué que c'est le tampon de brassage qui est mobile. Tous les modes de réalisation ci-dessous sont combinables avec des déplacements de la face exposée.

Ainsi selon un exemple, le tampon de brassage peut être animé par un mouvement de rotation et/ou de translation permettant de déplacer au moins certaines particules P à la surface 202 de la couche diélectrique 200. Cette étape de brassage permet ainsi de modifier les positions initiales des particules P sur la face exposée 202 de la couche diélectrique 200. Le caractère aléatoire de la répartition des particules P sur la face exposée 202 est ainsi renforcé. Selon une possibilité, les particules P sont déposées par dispersion sur le tampon 3 de brassage, puis mises en contact avec la face exposée 202 de la couche diélectrique 200 lors de l'application du tampon 3 de brassage sur ladite face exposée. Dans ce cas, la répartition des particules P est aléatoire sur la surface 30 du tampon 3 de brassage, et ces positions initiales aléatoires sont transférées à la surface de la couche diélectrique 200lors de la mise en contact. Ces positions initiales sont ensuite modifiées telle que décrit précédemment, lors de la mise en mouvement du tampon 3 de brassage au contact de la face exposée 202 de la couche diélectrique 200. Selon un exemple, la surface 30 du tampon 3 de brassage présente des aspérités réparties aléatoirement. Ces aspérités aléatoires renforcent le caractère aléatoire sur les positions initiales des particules, avant brassage.

Selon un exemple, le déplacement relatif du tampon 3 de brassage par rapport à la face exposée 202 est défini par les paramètres des rotations R1 et/ou R2 et de la ou des translations T (vitesses, trajectoires, accélérations, décélérations etc). Selon un mode de réalisation optionnel ce déplacement est au moins en partie aléatoire. Par exemple la vitesse du déplacement, l'accélération ou la décélération, en rotation et/ou en translation, varient de manière aléatoire. De manière alternative ou combinée, la trajectoire du déplacement est aléatoire.

Comme illustré à la figure 4, en pratique, le dépôt et le brassage des particules P à la surface 202 de la couche diélectrique 200 peut avantageusement se faire par un procédé de polissage mécano-chimique CMP. Classiquement, dans un procédé CMP, la plaque 10, c'est-à-dire le substrat 100 portant le niveau d'interconnexions 10 A, est maintenue en face arrière par une tête de polissage 2, du côté opposé à la face exposée 202 de la couche diélectrique 200, et les particules P sont dispersées sur un tampon 3 de polissage faisant face à la tête de polissage 2. Le tampon 3 est porté par un bâti 1 d'entraînement en rotation. La tête de polissage 2 portant la plaque 10 est ensuite mise en contact avec le tampon 3 de polissage avec une certaine force d'appui, et la tête de polissage 2 et le tampon 3 de polissage sont animés par des mouvements de rotation/translation relatifs R1, R2, T. Dans le cadre de la présente invention, le tampon 3 de polissage de l'équipement CMP correspond avantageusement au tampon de brassage mis en oeuvre dans le procédé selon l'invention.

Un tel procédé CMP habituellement configuré pour planariser une surface en retirant de la matière peut être configuré de façon à limiter ou éviter le retrait de matière de la couche diélectrique 200. En particulier, des paramètres tels que la force d'appui du tampon de polissage ou de brassage, la vitesse de rotation du tampon de brassage, le mouvement relatif du tampon de brassage vis-à-vis de la face exposée 202 de la couche diélectrique 200, la durée d'application du tampon de brassage, la nature des particules P, peuvent être choisis de façon à éviter une réduction significative d'épaisseur de la couche diélectrique 200. Selon un exemple, à l'issue de cette étape CMP, la couche diélectrique 200 peut présenter une épaisseur e' ≥ 0,9.e, voire e' ≥ 0,95.e, voire e' ≥ 0,98.e. Dans un procédé CMP classique, une étape de nettoyage est réalisée après application du tampon de brassage afin de retirer le maximum de particules. Dans le procédé selon l'invention, ce procédé CMP n'est pas finalisé, en particulier l'étape de nettoyage final n'est pas ou pas complètement réalisée et les particules P ne sont pas retirées en totalité à l'issue du brassage.

Selon une possibilité préférée, le procédé selon l'invention utilise donc avantageusement un procédé CMP incomplet ou dégradé pour déposer et répartir les particules P sur la face exposée 202 de la couche diélectrique 200. Comme les procédés CMP sont très classiques et parfaitement connus dans les technologies de la micro-électronique, le recours à un tel procédé CMP de façon détournée par le procédé selon l'invention permet une mise en oeuvre du procédé selon l'invention à un coût réduit. Les coûts de mise au point ou de développement sont ainsi réduits ou inexistants. La mise en oeuvre du procédé selon l'invention bénéficie également de la fiabilité des procédés CMP existants. Le procédé selon l'invention permet ainsi de répartir des particules P sur la face exposée 202 de la couche diélectrique 200 de façon fiable et parfaitement aléatoire.

Selon une possibilité, les particules P sont des billes d'oxyde de silicium, également dénommées billes de slurry, couramment utilisées dans les procédés CMP classiques. Ces billes de slurry sont sensiblement sphériques et présentent généralement une taille ou un diamètre bien calibré. De façon préférée, la taille ou le diamètre des particules P est supérieure ou égale au diamètre des motifs d'ouvertures réalisés ensuite. Selon un exemple, les billes de slurry présentent un diamètre de l'ordre de 100 nm.

D'autres particules P de tailles et de formes variées sont envisageables. Des particules organométalliques ou organo-minérales peuvent également être envisagées. La nature et/ou la composition chimique des particules P peut être avantageusement choisie en fonction de la nature et/ou de la composition chimique de la couche diélectrique et de la couche de masque. La nature et/ou la composition chimique des particules P peut notamment être sensiblement identique à la nature et/ou à la composition chimique de la couche diélectrique.

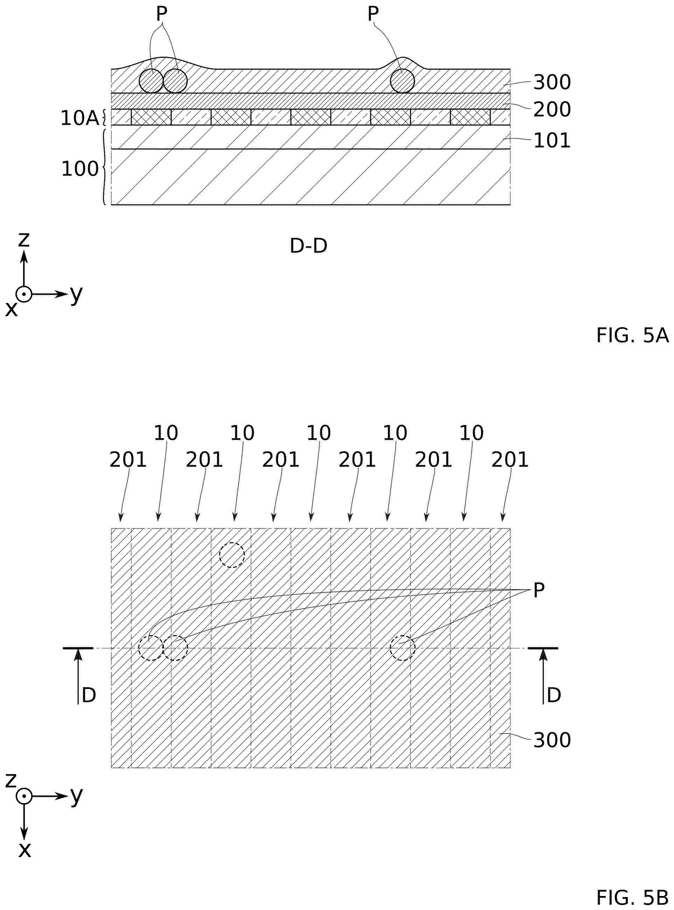

Comme illustré aux figures 5A, 5B, à l'issue du dépôt et du brassage aléatoire des particules P à la surface 202 de la couche diélectrique 200, une couche de masque 300 est formée.

La couche de masque 300 est de préférence déposée de façon conforme sur la couche diélectrique 200 et sur les particules P. Elle est choisie de préférence en un matériau présentant une sélectivité de gravure importante vis-à-vis du matériau diélectrique, par exemple pour une gravure HF vapeur. La sélectivité de gravure S_{diélec:HM} entre le matériau diélectrique et le matériau de la couche de masque est de préférence supérieure ou égale à 10:1. Pour une couche diélectrique 200 à base de SiO2, la couche de masque 300 peut être à base de SiN ou de TiN. Pour une couche diélectrique 200 à base de SiN, la couche de masque 300 peut être à base de Si. La couche de masque 300 peut présenter une épaisseur comprise entre 20 nm et 1000 nm, de préférence entre 50 nm et 300 nm. L'épaisseur de la couche de masque 300 pourra notamment être déterminée en fonction de la sélectivité de gravure entre les matériaux de la couche de masque et de la couche diélectrique. Selon un exemple, l'épaisseur de la couche de masque 300 est de l'ordre de la dimension en hauteur des particules P.

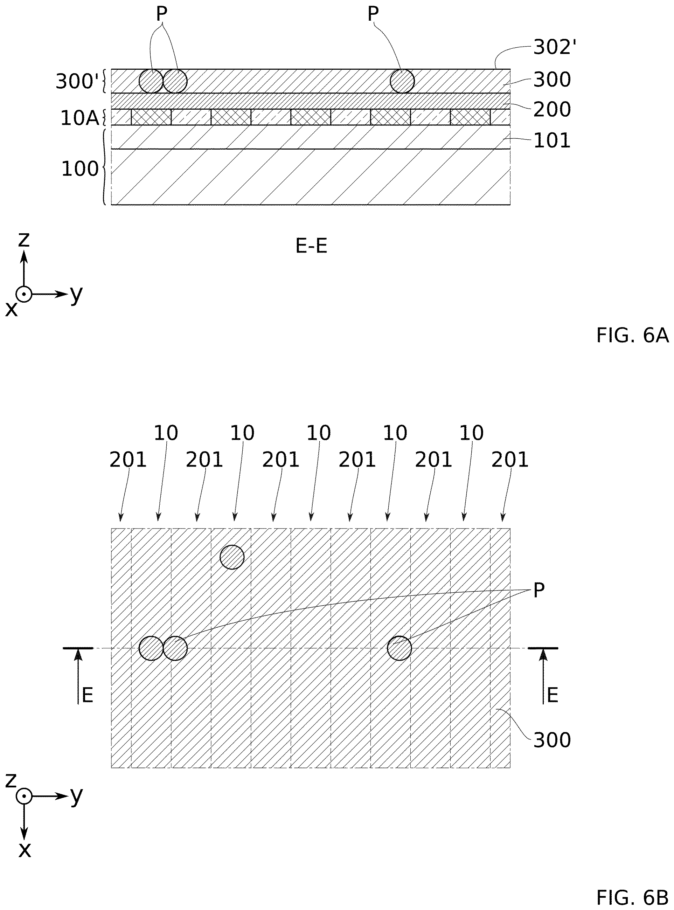

Comme illustré aux figures 6A, 6B, une étape de planarisation est effectuée de manière à obtenir une couche composite 300' présentant une surface plane 302'. Cette couche composite 300' comprend des parties de la couche de masque 300 et au moins des parties des particules P. La planarisation peut être effectuée classiquement par CMP (avec une étape de nettoyage complète en fin de CMP), ou par gravure, par exemple par un procédé de gravure classique dénommé « etch back ».

A l'issue de la planarisation, les particules P peuvent rester totalement couvertes par la couche de masque 300, ou affleurer au niveau de la surface plane 302' de la couche composite 300'. Cette planarisation permet d'obtenir une surface plane 302' sur laquelle la lithographie suivante peut être effectuée de façon optimisée.

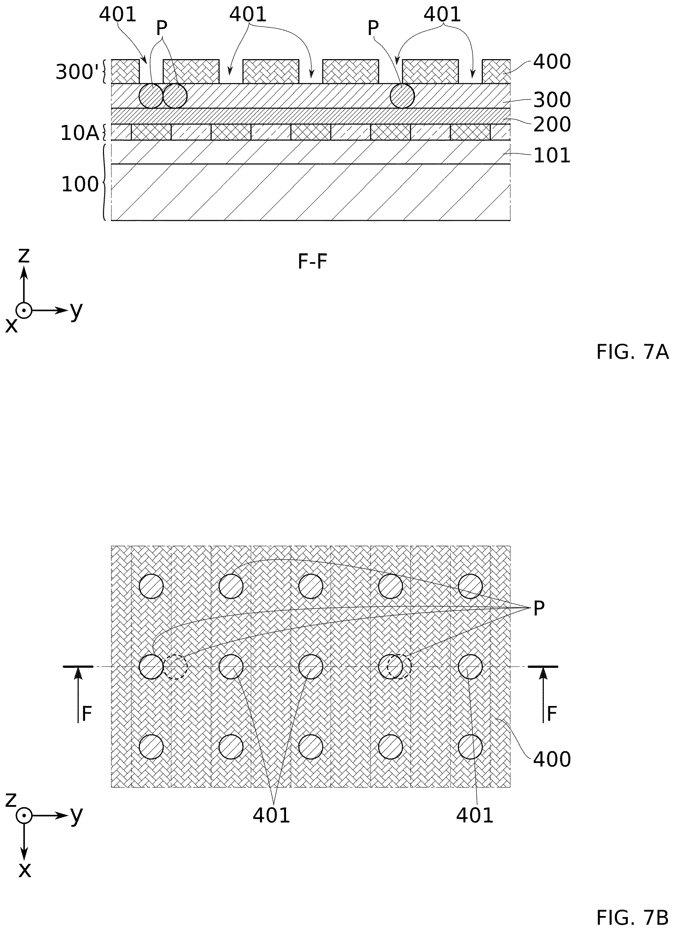

Les figures 7A, 7B, illustrent des étapes de lithographie mises en oeuvre pour former les motifs d'ouvertures correspondant à la définition des vias dans la zone d'individualisation.

Typiquement, une couche de lithographie 400 à base de résine est déposée sur la couche composite 300' comprenant les particules P.

La couche de lithographie 400 peut être formée d'une ou plusieurs couches. Elle peut être à base de résine photosensible, par exemple à tonalité positive. Un revêtement antireflets sous-jacent de type BARC (Bottom Anti Reflective Coating signifiant revêtement anti-réflexion de fond) est de préférence intercalé entre la couche composite 300' et la couche de lithographie 400.

Alternativement, la couche de lithographie 400 peut comprendre deux couches de type SOC (spin on carbon) et SiARC (pour « silicon anti reflective coating » signifiant revêtement anti réflexion à base de silicium), ainsi qu'une couche de résine photosensible (masque dit « Tri Layer »).

Les différentes couches de cette couche de lithographie 400 peuvent être déposées par une méthode classique de spin coating (à la tournette). La couche de lithographie 400 peut présenter une épaisseur comprise entre 50 nm et 300 nm.

Des motifs d'ouvertures 401 sont formés dans la couche de lithographie 400. Ces motifs d'ouvertures 401 sont situés au moins en partie au droit des pistes électriques 10. Les motifs d'ouvertures 401 présentent une dimension latérale selon y, typiquement un diamètre, comprise entre 20 nm et 1000 nm.

Les motifs d'ouvertures 401 sont réalisés en mettant en oeuvre des techniques classiques de lithographie, telles que la lithographie optique, la lithographie électronique par faisceau d'électrons (e-beam), la lithographie par nanoimpression ou toute autre technique de lithographie connue de l'homme du métier.

Après lithographie, la couche de lithographie 400 comprend des motifs d'ouvertures 401 situés au-dessus de parties de la couche de masque 300 de la couche composite 300', et des motifs d'ouvertures 401 situés au-dessus de parties des particules P de la couche composite 300'.

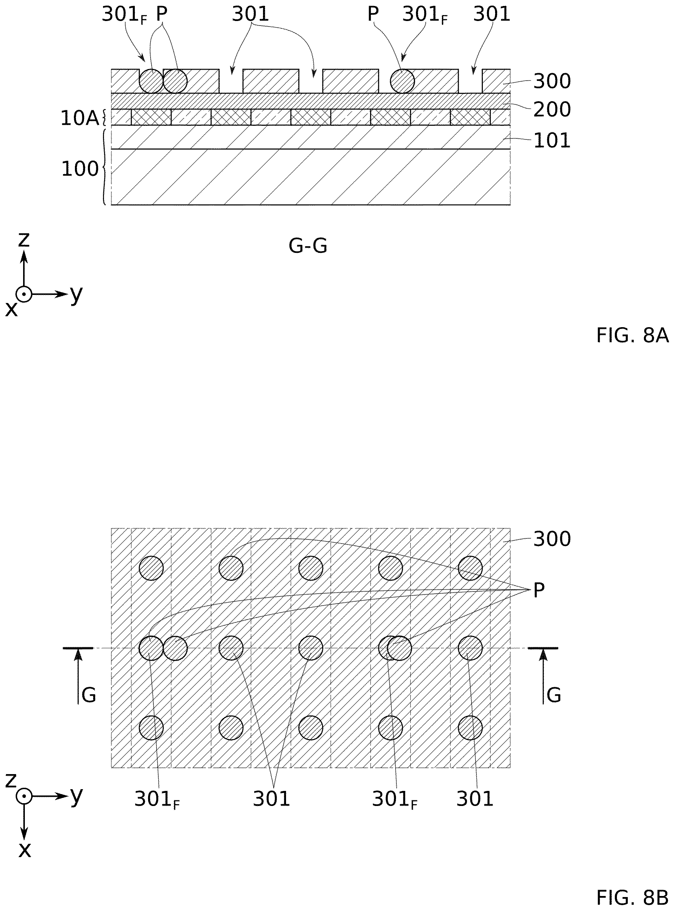

Comme illustré aux figures 8A, 8B, une gravure est effectuée au travers des motifs d'ouvertures 401 pour ouvrir la couche composite 300'. Cette gravure est configurée pour former les ouvertures de masque 301, 301_{F}.

Le revêtement antireflets et les parties de couche de masque 300 de la couche composite 300' peuvent être gravés par plasma, à l'aide d'une chimie de gravure à base de chlore, par exemple Cl2 /BCl3. Ce type de plasma permet d'utiliser une couche de lithographie 400 à base de résine présentant une fine épaisseur, par exemple inférieure à 200 nm.

Selon une possibilité avantageuse, les particules P présentent une sélectivité de gravure S_{P:HM} vis-à-vis de la couche de masque 300, lors de la gravure de la couche composite 300', inférieure ou égale à 1:5. Les particules P sont ainsi sensiblement conservées lors de l'ouverture de la couche composite 300'. Cela permet de conserver en partie la ou les particules P présentes au niveau d'une ouverture 301_{F} lors de l'ouverture de la couche composite 300'. Les parties de couche de masque 300 de la couche composite 300' sont quant à elles gravées au niveau d'une ouverture 301 lors de l'ouverture de la couche composite 300'.

A l'issue de l'ouverture de la couche composite 300', la couche composite 300' comprend des ouvertures de masque 301 débouchantes, dans les parties de couche de masque 300 de la couche composite 300', et des ouvertures de masque 301_{F} altérées, au niveau des particules P de la couche composite 300'.

La couche de lithographie 400 est de préférence retirée après ouverture de la couche composite 300'. Ce retrait peut se faire classiquement par une étape dite de « stripping », par exemple par plasma à base d'oxygène.

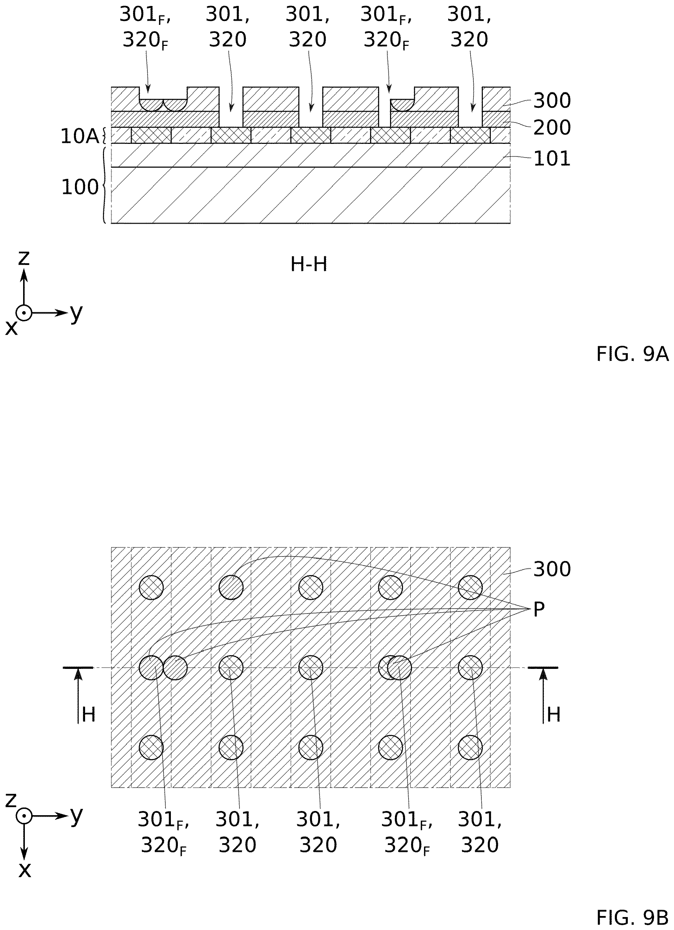

Comme illustré aux figures 9A, 9B, la couche diélectrique 200 est ensuite gravée au travers des ouvertures débouchantes 301 totalement ouvertes et éventuellement des ouvertures altérées 301_{F} partiellement bouchées de la couche composite 300'. Cette gravure peut être effectuée par voie sèche, typiquement par plasma.

Après gravure de la couche diélectrique 200, on obtient ainsi dans la couche diélectrique 200 des ouvertures de via 320 fonctionnelles, au droit des ouvertures de masque 301 débouchantes, et des ouvertures de via 320_{F} dysfonctionnelles, au droit des ouvertures de masque 301_{F} altérées. Les ouvertures de via 320_{F} dysfonctionnelles peuvent être non gravées ou partiellement gravées. La distribution des ouvertures de via 320_{F} dysfonctionnelles reflète directement la position des particules P et est donc totalement aléatoire.

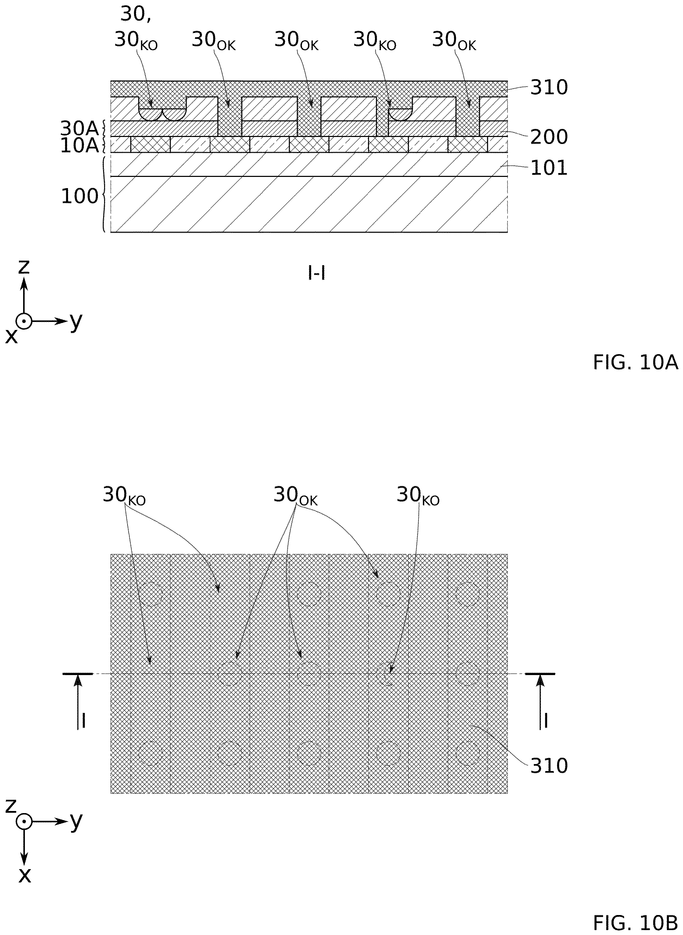

Comme illustré aux figures 10A, 10B, les ouvertures 320, 320_{F} sont ensuite remplies par un matériau conducteur 310, de façon à former respectivement des vias fonctionnels 30_{OK} et des vias dysfonctionnels 30_{KO}. Les vias fonctionnels 30_{OK} et les vias dysfonctionnels 30_{KO} forment le niveau d'interconnexions 30A. Le matériau conducteur est de préférence du cuivre. Les procédés de dépôt de cuivre, par exemple un remplissage électrolytique ECD (acronyme de « Electro Chemical Déposition »), sont bien connus de l'homme du métier.

Les vias fonctionnels 30_{OK} présentent typiquement une conductivité nominale lors d'un test électrique dédié. Les vias dysfonctionnels 30_{KO} présentent typiquement une conductivité inférieure à la conductivité nominale, voire une conductivité nulle, lors de ce test électrique. Un certain nombre de vias 30_{KO}, aléatoirement répartis, ne seront donc pas connectés ou seront mal connectés aux lignes 10.

Selon une possibilité, les vias dysfonctionnels 30_{KO} dégradés, c'est-à-dire formant une mauvaise connexion électrique avec les lignes 10, peuvent être ultérieurement désactivés, par exemple si la stabilité de leur connexion électrique n'est pas assez performante. Ils peuvent alternativement être utilisés en l'état, en tirant parti de leur résistance de connexion plus élevée (la surface de contact métallique étant plus faible que pour un via fonctionnel 30_{OK}). Cette résistance de connexion plus élevée induit notamment un temps de réponse différent de la circuiterie, par exemple lors du test électrique de la zone d'individualisation.

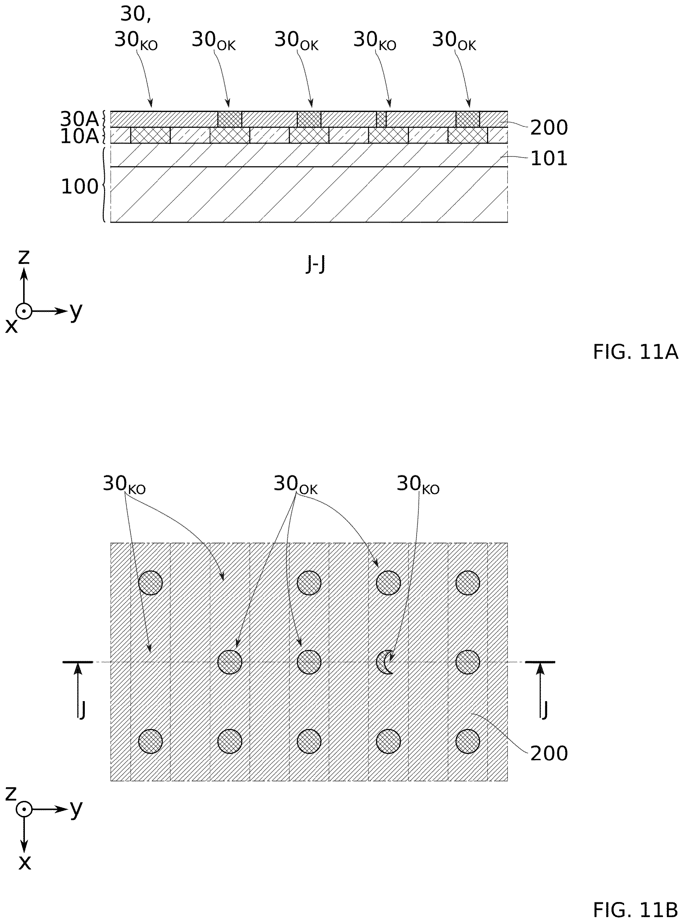

Comme illustré aux figures 11A, 11B, le cuivre déposé en excès et la couche composite 300' peuvent être retirés, par exemple par polissage mécano-chimique CMP ou par gravure sèche (etch back). Une surface plane en face supérieure du niveau d'interconnexions 30A est ainsi obtenue.

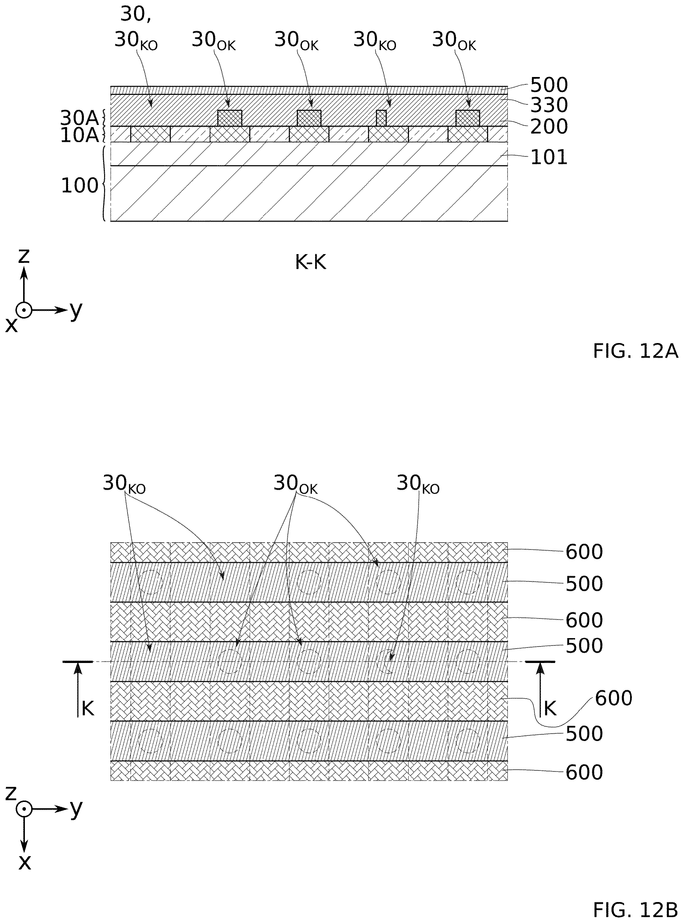

Comme illustré aux figures 12A, 12B, un nouvel empilement d'une couche diélectrique 330 et d'un masque de gravure 500 est formé sur la face supérieure du niveau d'interconnexions 30A, en prévision de la formation du deuxième niveau de pistes 20A. Un masque résine 600 est formé par lithographie sur cet empilement de façon à définir les pistes du deuxième niveau.

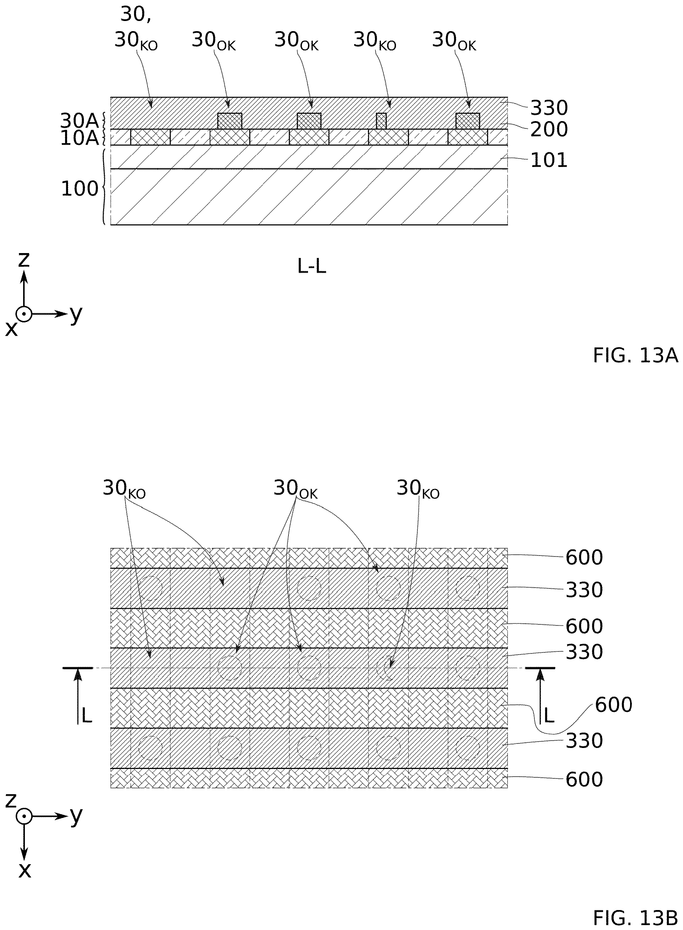

Comme illustré aux figures 13A, 13B, le masque de gravure 500 est gravé au travers du masque résine 600. Les motifs de pistes du masque 600 sont ainsi transférés dans le masque de gravure 500. Le masque résine 600 peut ensuite être retiré, par exemple par stripping.

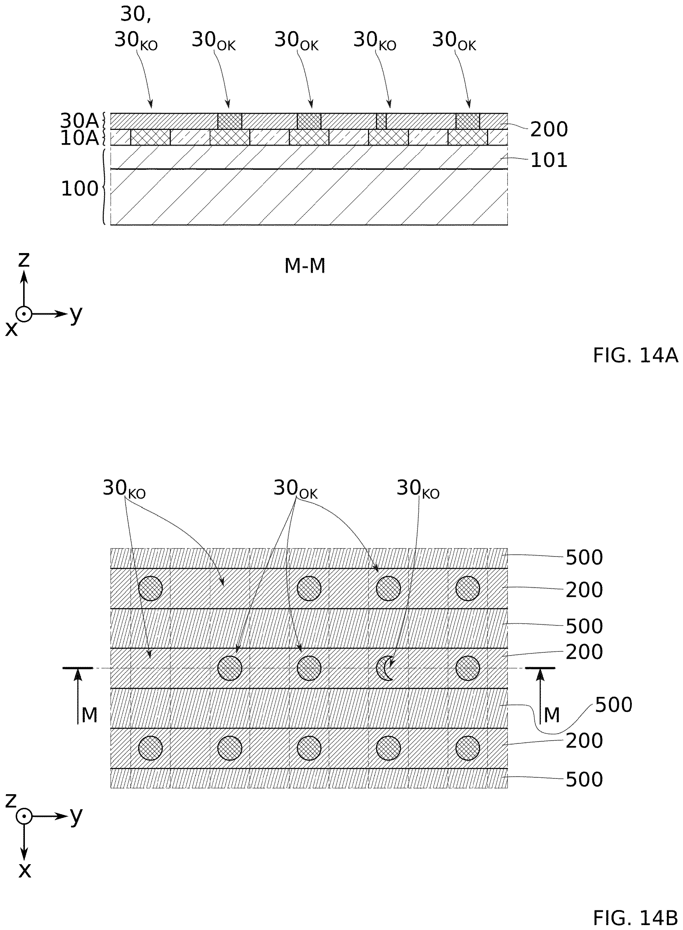

Comme illustré aux figures 14A, 14B, la couche diélectrique 330 est gravée au travers du masque de gravure 500. Cette gravure peut être effectuée de façon standard, typiquement par gravure sèche. Les motifs de pistes sont ainsi transférés dans la couche diélectrique 330.

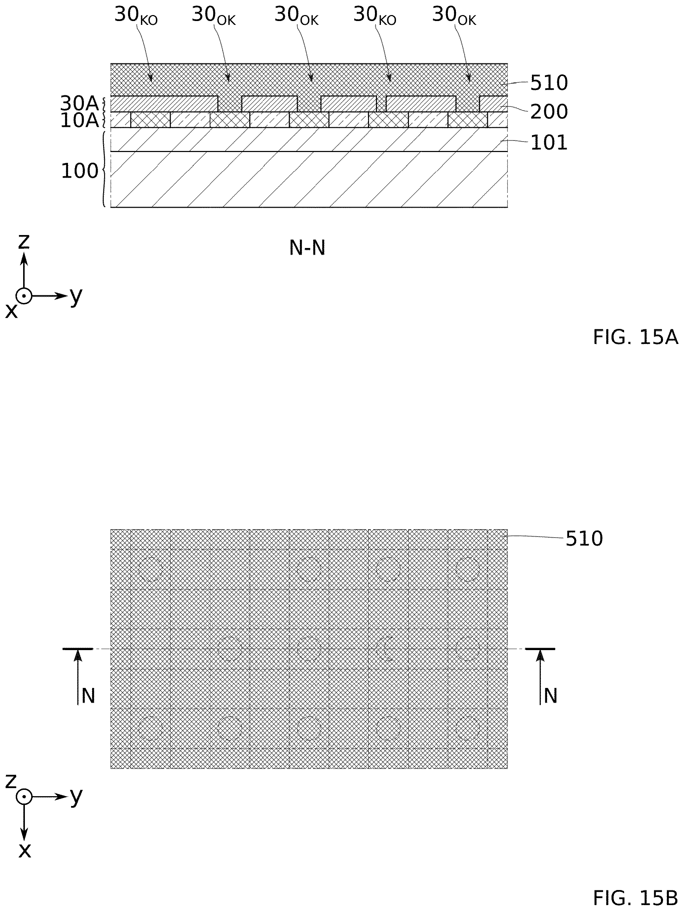

Comme illustré aux figures 15A, 15B, un dépôt de cuivre est effectué comme précédemment, de façon à remplir les motifs de pistes.

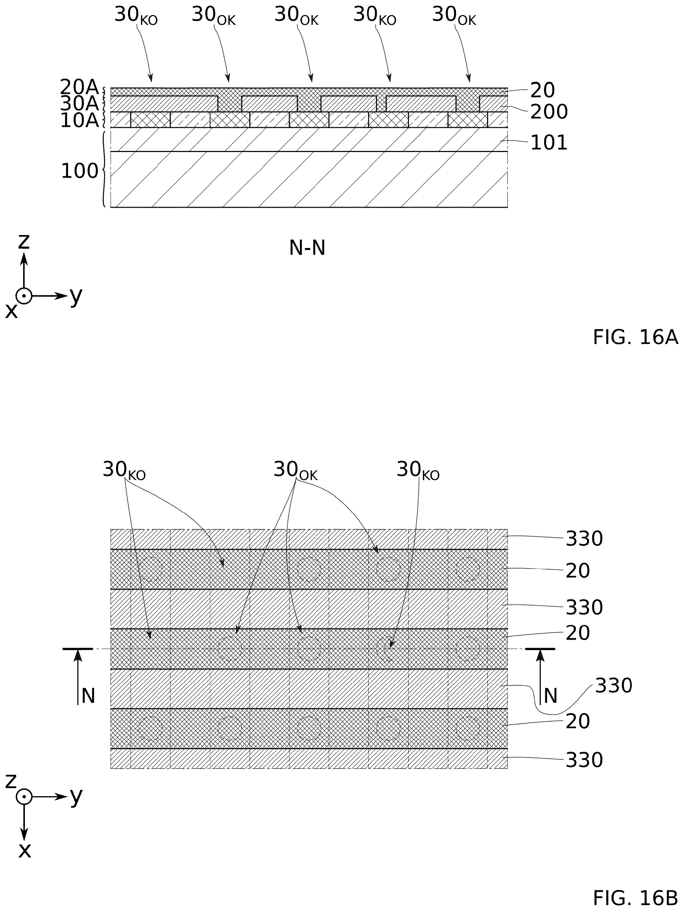

Comme illustré aux figures 16A, 16B, une planarisation par CMP est ensuite effectuée pour retirer le cuivre en excès, et de façon à obtenir une surface plane en face supérieure du deuxième niveau de piste 20A. Les pistes 20 du deuxième niveau de piste 20A sont ainsi formées.

D'autres niveaux de pistes et d'interconnexions peuvent être réalisés au-dessus des niveaux 10A, 30A, 20A.

Un réseau de vias 30 aléatoirement connectés est ainsi obtenu, avec des vias fonctionnels totalement connectés 30_{OK} et des vias dysfonctionnels 30_{KO} qui ne sont pas connectés ou qui sont partiellement connectés. La position des différents vias 30_{OK}, 30_{KO} et leur nombre varie d'une zone PUF à une autre zone PUF, d'une puce microélectronique à une autre puce microélectronique.

Au vu de la description qui précède, il apparaît clairement que le procédé proposé offre une solution particulièrement efficace pour réaliser une zone d'individualisation de type PUF.

L'invention n'est pas limitée aux modes de réalisations précédemment décrits. Le mode de réalisation décrit ci-dessus s'intègre dans la fabrication de composés semiconducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procédé.

## Revendications

1. Procédé de réalisation d'une zone d'individualisation (1) d'une puce microélectronique, ladite puce comprenant au moins :
• un premier (10A) et un deuxième (20A) niveaux de pistes électriques (10, 20),
• un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
la puce présentant au moins une autre zone, distincte de la zone d'individualisation, destinée à former une zone fonctionnelle de la puce,
le procédé comprenant au moins les étapes suivantes effectuées au niveau de la zone d'individualisation (1) de la puce :
• fournir au moins le premier niveau (10A) de pistes électriques (10),
• former au moins une couche diélectrique (200) sur le premier niveau (10A),
• déposer aléatoirement des particules (P) sur une face exposée (202) de la couche diélectrique (200), puis
• appliquer un tampon de brassage (3) sur ladite face exposée (202) pour que le tampon de brassage (3) déplace au moins certaines particules (P) sur la face exposée (202) de la couche diélectrique (200),
• déposer une couche (300) de masque sur la face exposée (202) comprenant les particules (P),
• planariser la couche (300) de masque de façon à obtenir une couche composite (300') comprenant les particules (P) et présentant une surface plane (302'),
• déposer une couche (400) de lithographie sur la couche composite (300'),
• former dans la couche (400) de lithographie des motifs d'ouvertures (401), lesdits motifs d'ouvertures (401) étant situés au moins en partie au droit des pistes électriques (10),
• ouvrir la couche composite (300') au travers des motifs d'ouvertures (401) de la couche (400) de lithographie, de façon à former des ouvertures de masque (301, 301F), lesdites ouvertures de masque (301, 301F) comprenant des ouvertures de masque (301F) altérées au niveau des particules (P) de la couche composite (300'), et des ouvertures de masque (301) débouchantes en dehors des particules (P) de la couche composite (300'),
• graver l'au moins une couche diélectrique (200) au travers des ouvertures de masque (301, 301F), de façon à former des ouvertures de vias (320, 320F) débouchant sur le premier niveau (10A) des pistes électriques (10), lesdites ouvertures de vias (320, 320F) comprenant des ouvertures de vias fonctionnelles (320) au droit des ouvertures de masque (301) débouchantes, et des ouvertures de vias dégradées (320F) au droit des ouvertures de masque (301F) altérées,
• remplir les ouvertures de vias (320, 320F) avec un matériau électriquement conducteur de sorte à former au moins les vias (30) du niveau (30A) d'interconnexions, lesdits vias (30) comprenant des vias fonctionnels (30OK) au niveau des ouvertures de vias fonctionnelles (320) et des vias dysfonctionnels (30KO) au niveau des ouvertures de vias dégradées (320F),
ledit procédé comprenant en outre, préalablement au dépôt des particules dans la zone d'individualisation (1), une formation d'un masque de protection sur la zone destinée à former la zone fonctionnelle de la puce.

2. Procédé selon la revendication précédente dans lequel le dépôt aléatoire des particules (P) se fait par dispersion d'une solution contenant lesdites particules (P) en suspension.

3. Procédé selon l'une quelconque des revendications précédentes dans lequel l'application du tampon de brassage (3) sur la face exposée (202) comprend :
• au moins un mouvement de rotation (R1, R2) relatif dudit tampon (3) par rapport à la face exposée (202) autour d'un axe normal à la face exposée (202) de la couche diélectrique (200), et/ou
• au moins un mouvement de translation (T) relatif dudit tampon (3) par rapport à la face exposée (202) de la couche diélectrique (200).

4. Procédé selon l'une quelconque des revendications précédentes dans lequel la planarisation de la couche (300) de masque est effectuée par un procédé de polissage mécano-chimique (CMP).

5. Procédé selon l'une quelconque des revendications 1 à 3 dans lequel la planarisation de la couche (300) de masque est effectuée par gravure.

6. Procédé selon l'une quelconque des revendications précédentes dans lequel les particules (P) présentent une partie exposée à l'issue de la planarisation.

7. Procédé selon l'une quelconque des revendications 1 à 5 dans lequel les particules (P) restent couvertes par la couche (300) de masque à l'issue de la planarisation.

8. Procédé selon l'une quelconque des revendications précédentes dans lequel le dépôt aléatoire des particules (P) suivi par l'application du tampon de brassage (3) correspond à une étape d'un procédé de polissage mécano-chimique (CMP).

9. Procédé selon l'une quelconque des revendications précédentes dans lequel les particules (P) présentent chacune au moins une dimension supérieure ou égale à un diamètre des motifs d'ouvertures (401) de la couche (400) de lithographie.

10. Procédé selon l'une quelconque des revendications précédentes dans lequel les particules (P) sont des billes ou des rouleaux.

11. Procédé selon l'une quelconque des revendications précédentes dans lequel les particules (P) présentent une composition chimique différente de celle de la couche de masque (300).

12. Procédé selon l'une quelconque des revendications précédentes dans lequel l'ouverture de la couche composite (300') se fait par gravure sèche anisotrope, selon une direction (z) normale à la face exposée (202).

13. Procédé selon l'une quelconque des revendications précédentes dans lequel les particules (P) présentent une sélectivité de gravure SP: HM vis-à-vis de la couche (300) de masque, lors de l'ouverture de la couche composite (300'), inférieure ou égale à 1:5.

14. Procédé de réalisation d'un dispositif microélectronique comportant au moins un circuit intégré, le circuit intégré comportant au moins :
• un premier (10A) et un deuxième (20A) niveaux des pistes électriques (10, 20),
• un niveau (30A) d'interconnexions situé entre les premiers (10A) et deuxième (20A) niveaux des pistes électriques et comportant des via (30) destinées à connecter électriquement des pistes (10) du premier niveau (10A) avec des pistes (20) du deuxième niveau (20A),
• une zone d'individualisation (1) réalisée en mettant en oeuvre le procédé selon l'une quelconque des revendications précédentes sur une partie seulement du circuit intégré.
